# EUROPÄISCHE PATENTSCHRIFT

(11) **EP 1 042 144 B1**
(45) Veröffentlichungstag und Bekanntmachung des Hinweises auf die Patenterteilung: **22.03.2006**
(21) Anmeldenummer: 98965809.1
(22) Anmeldetag: 10.12.1998
(51) Int. Cl.: B60R 21/26

(54) **PYROTECHNISCHER GASGENERATOR**
PYROTECHNIC GAS GENERATOR
GENERATEUR DE GAZ PYROTECHNIQUE

(30) Priorität: 23.12.1997 DE 19757478
(43) Veröffentlichungstag der Anmeldung: 11.10.2000
(73) Patentinhaber: Petri - DN GmbH, Inflator Systems, 90765 Fürth (DE)
(72) Erfinder: BAYER, Karl, D-92348 Berg (DE); HILTNER, Rudolf, D-90768 Fürth (DE)
(74) Vertreter: Scherzberg, Andreas Hans
(86) Internationale Anmeldenummer: PCT/EP1998/008071
(87) Internationale Veröffentlichungsnummer: WO 1999/033685

(56) Entgegenhaltungen:
- EP-A- 0 773 145
- EP-A- 0 879 739
- WO-A-97/16695

## Beschreibung

Die Erfindung betrifft einen pyrotechnischen Gasgenerator nach dem Oberbegriff des Anspruchs 1.

Aus der gattungsgemäßen EP 0 773 145 A2 ist eine Anordnung zum mehrstufigen Zünden eines pyrotechnischen Gasgenerators für passive Rückhaltesysteme in Kraftfahrzeugen bekannt. Der Gasgenerator besteht aus zwei voneinander unabhängigen Laderäumen in denen jeweils Treibstoff enthalten ist und denen jeweils eine Anzündeinheit zugeordnet ist. Diese Anzündeinheiten sind unabhängig voneinander anzuzünden. Beide Laderäume sind mit einem gemeinsamen Expansionsraum verbunden.

Der Erfindung liegt die Aufgabe zugrunde, einen pyrotechnischen Gasgenerator nach dem Oberbegriff des Anspruchs 1 so zu gestalten, daß bei kleiner Baugröße und geringem Gewicht insgesamt niedrige Herstellkosten erzielt sind. Dabei soll ein Überzünden vom Expansionsraum in die einzelnen Laderäume verhindert werden.

Erfindungsgemäß wird diese Aufgabe dadurch gelöst, daß zwischen den Laderäumen und dem Expansionsraum ein gemeinsamer, als Membran ausgebildeter Deckel angeordnet ist, daß in jedem Laderaum eine erste Lochblechscheibe angeordnet ist, auf der der Deckel aufliegt, daß außerhalb der Laderäume unmittelbar über dem Deckel eine zweite Lochblechscheibe angeordnet ist, wobei der Deckel zwischen der ersten und zweiten Lochblechscheibe eingeklemmt ist und daß in der ersten Lochblechscheibe kleinere Bohrungen als in der zweiten Lochblechscheibe angeordnet sind.

Der beanspruchte Sandwichbau von erster Lochblechscheibe - Membran - zweiter Lochblechscheibe mit den größeren Bohrungen in der zweiten Lochblechscheibe hat den Vorteil, daß die Membran bei einem bestimmten Funktionsdruck in den Laderäumen durchbrochen wird und die Gasschwaden des Treibstoffs in den Expansionsraum gelangen können. Ein ungewolltes Überzünden vom Expansionsraum in den Laderaum ist jedoch nicht möglich, wenn die Membran in ihrer Dicke so dimensioniert ist, daß sie an den relativ kleinen Bohrungen der ersten Lochblechscheibe nicht geöffnet wird.

In bevorzugter Ausführungsform haben die Bohrungen in der ersten Lochblechscheibe einen Durchmesser zwischen 1 mm und 5 mm, die Bohrungen in der zweiten Lochblechscheibe einen Durchmesser zwischen 6 mm und 10 mm und der Deckel bzw. die Membran hat eine Dicke zwischen 0,1 und 0,5 mm. Es können hier jedoch auch andere Werte sinnvoll sein. Ist z. B. der Deckel bzw. die Membran dicker als 0,1 bis 0,5 mm, dann muß der Durchmesser der Bohrungen in den beiden Lochblechscheiben ebenfalls vergrößert werden.

Wichtig ist jedoch, daß ein Öffnen des Deckels von "innen", d. h. vom Laderaum möglich ist, jedoch vom Expansionsraum in den Laderaum nicht.

Vorteilhafterweise sind die Laderäume in einem einteiligen Ladebehälter angeordnet, wobei der Boden des Ladebehälters als Generatorstruktur ausgebildet ist. Dies bedeutet, daß der Boden stabiler als die Seitenwände ist.

Zur Vermeidung eines Überzündens von einem Laderaum in den anderen, ist bevorzugt eine Nut in den Wänden der Laderäume bzw. im Ladebehälter angeordnet, in der der Deckel formschlüssig gehalten ist. Zum besseren Halt ist zweckmäßigerweise in die Nut ein zusätzliches Klemmelement, z. B. ein Ring, eingesetzt. Dieses Klemmelement kann auch z. B. eingeschweißt oder eingeklebt werden. Zur weiteren Verbesserung der Dichtheit ist bevorzugt der Deckel mit der Wand der Laderäume bzw. dem Ladebehälter als Bördel ausgebildet, d. h. verbördelt. Durch diese Maßnahmen ist ein Dichtungslabyrinth geschaffen. Je nach den Erfordernissen kann die Nut auch nur um einen Laderaum gelegt werden.

Im Boden des Ladebehälters sind bevorzugt in die Laderäume hineinragende Anzündeinheiten eingesetzt. Der Boden kann hierzu entsprechend eingewölbt sein oder die Anzündeinheiten sind über ein Dichtungselement eingesetzt.

Erfindungsgemäß ist der Ladebehälter von einem Gehäuse umgeben, welches durch Clinchen und/oder Bördeln mit dem Ladebehälter verbunden ist.

Bevorzugt besteht der Ladebehälter aus Aluminium und ist im Fließpreßverfahren hergestellt.

Der Expansionsraum ist sinnvollerweise mit einem den Ladebehälter konzentrisch umgreifenden Filterraum verbunden und der Filterraum steht über Öffnungen mit einem Luftsack in Verbindung und bildet so einen Airbag.

Weitere Merkmale der Erfindung ergeben sich aus den Figuren, die nachfolgend beschrieben sind. Es zeigt:
- Fig. 1: im Schnitt einen erfindungsgemäßen Gasgenerator,
- Fig. 2: einen Schnitt entlang der Linie A - A in Fig. 1,
- Fig. 3: den Ausschitt B aus Fig. 1 vergrößert dargestellt,
- Fig. 4: den Ausschnitt C aus Fig. 1 vergrößert dargestellt,
- Fig. 5: den Ausschnitt D aus Fig. 1 vergrößert dargestellt und
- Fig. 6: den Ausschnitt E aus Fig. 1 vergrößert dargestellt.

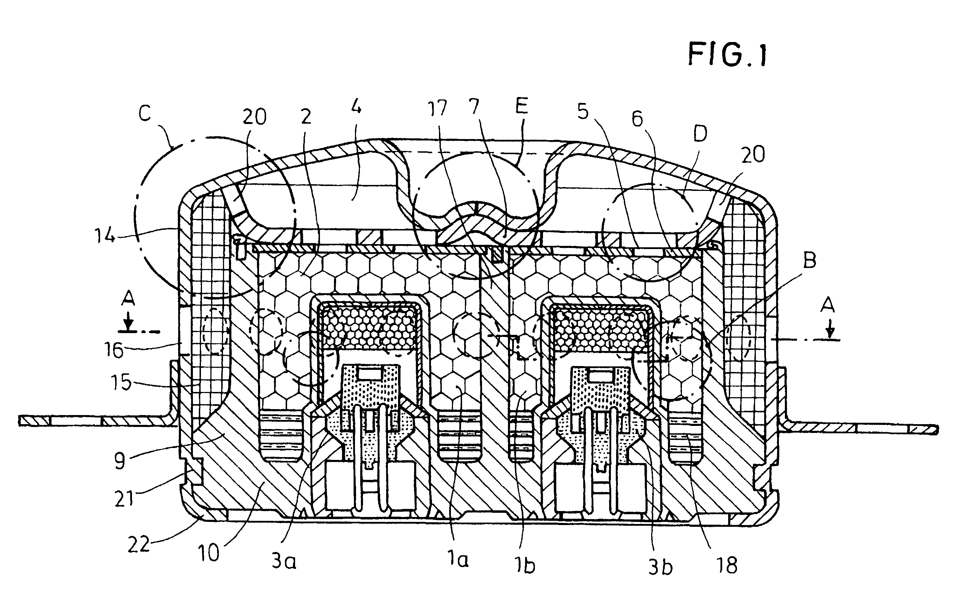

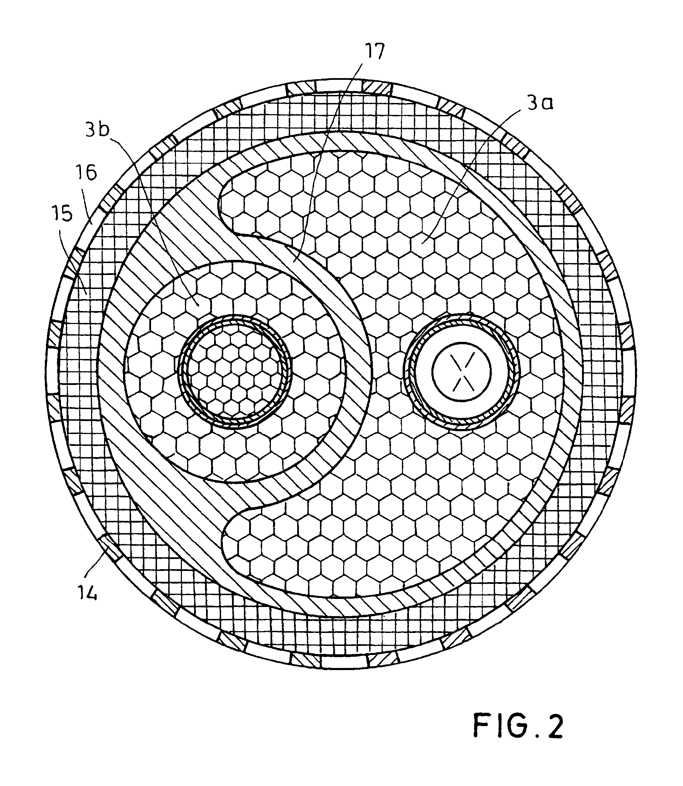

Fig. 1 zeigt im Schnitt einen erfindungsgemäßen pyrotechnischen Gasgenerator und Fig. 2 einen Schnitt entlang der Linie A - A in Fig. 1.

Der Gasgenerator besteht aus einem einteiligen Ladebehälter 9, dessen Boden 10 als Generatorstruktur ausgebildet ist. Im Ladebehälter 9 sind zwei Laderäume 1 a, 1 b angeordnet, die durch eine Trennwand 17 voneinander getrennt sind. In den Boden 10 des Ladebehälters 9 sind zwei in die Laderäume 1a, 1b hineinragende Anzündeinheiten 3a, 3b eingesetzt. Der Boden 10 des Ladebehälters 9 ist zur Aufnahme der Anzündeinheiten 3a, 3b in die Laderäume 1a, 1b eingewölbt und bildet so einen Einsetzraum. Die Anzündeinheiten 3a, 3b füllen diesen Einsetzraum vollständig aus und bestehen im wesentlichen aus einem Anschlußstecker, einem Anschlußelement, einem Zündmittel und einer Verstärkungsladung. Eine derartige Anzündeinheit ist beispielhaft beschrieben in der EP 0 618 424 B1. Es kann jedoch auch jede andere Anzündeinheit verwendet werden.

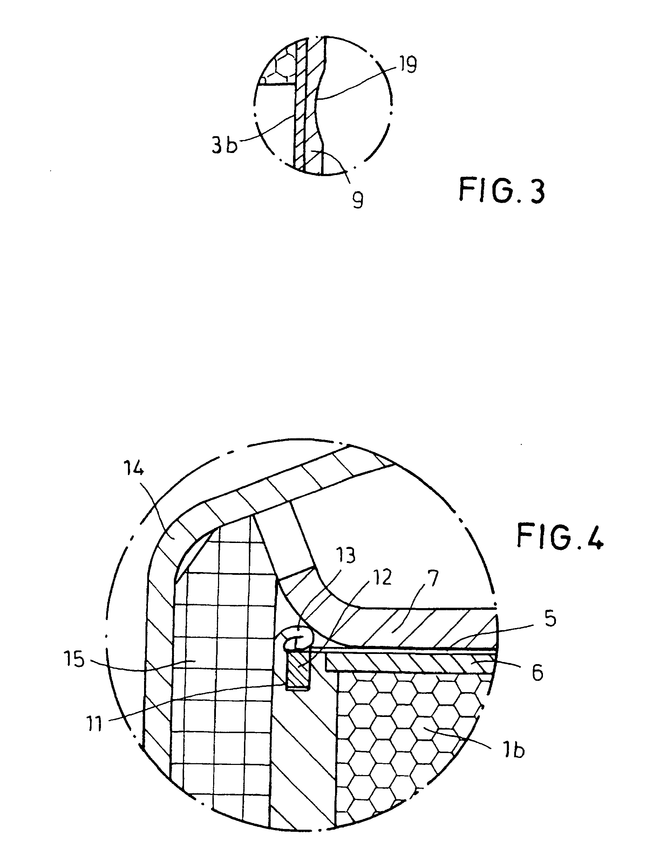

Durch Einkerben und Umbiegen des Bodens 10 sind die Anzündeinheiten 3a, 3b im Ladebehälter 9 festgesetzt. Fig. 3 zeigt den Ausschnitt B aus Fig. 1 vergrößert dargestellt. Der Ladebehälter 9 bzw. die Wand des Einsetzraumes ist in einem Bereich als Sollbruchstelle 19 ausgebildet. Bei Anzündung der Anzündeinheiten 3a, 3b reißt an dieser Sollbruchstelle 19 die Behälterwand auf und der Anzündstrahl trifft auf den in dem Laderäumen angeordneten Treibstoff 2.

Der Laderaum 1a ist sichelförmig ausgebildet und umschließt halbseitig den zylinderförmigen kleineren Laderaum 1 b. Die Laderäume 1a, 1b sind vollständig mit Treibstoff 2 in Form von Pellets gefüllt, wobei ein Drahtgewirk 18 am Boden der Laderäume als Volumenausgleich eingelegt ist. Den Deckel 5 bildet erfindungsgemäß eine Membran, die zwischen einer ersten 6 und einer zweiten Lochblechscheibe 7 eingeklemmt ist. Der Aufbau dieser Sandwichbauweise Lochblechscheibe - Deckel - Lochblechscheibe wird später eingehend an den Figuren 4 - 6 gezeigt.

Beide deckelseitigen Enden der Laderäume 1 a, 1b grenzen an einen gemeinsamen Expansionsraum 4, der wiederum über Durchbrüche 20 in der zweiten Lochblechscheibe 7, die tellerförmig ausgebildet ist, mit einem den Ladebehälter 9 konzentrisch umgreifenden Filterraum 15 verbunden ist. Dieser Filterraum 15 steht über Öffnungen 16 in der Wand des Gehäuses 14 mit einem nicht gezeigten Luftsack in Verbindung.

Das Gehäuse 14 umgibt den Ladebehälter 9 bis auf seinen Boden 10 vollständig und ist mit diesem durch Clinchen 21 und Bördeln 22 verbunden. Das Gehäuse 14 ragt in den Expansionsraum 4 und bildet so eine Auflage für die zweite Lochblechscheibe 7. Ebenso bildet der tellerförmige Rand der zweiten Lochblechscheibe 7 eine Auflage für das Gehäuse 14.

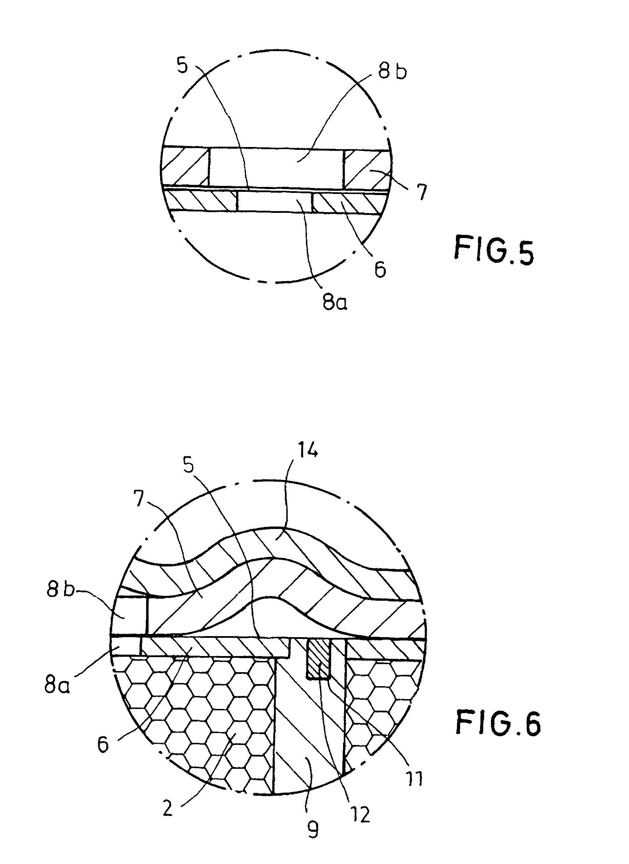

Wie schon ausgeführt, ist der als Membran ausgebildete Deckel 5 zwischen der ersten 6 und zweiten Lochblechscheibe 7 eingeklemmt. Dies ist gut an den Figuren 4 - 6 zu sehen, wobei Fig. 4 den Ausschnitt C, Fig. 5 den Ausschnitt D und Fig. 6 den Ausschnitt E aus Fig. 1 vergrößert darstellt.

Die erste Lochblechscheibe 6 ist formschlüssig im jeweiligen Laderaum 1 a, 1 b angeordnet und bildet eine Auflage für den Deckel 5. Außerhalb der Laderäume 1 a, 1 b unmittelbar über dem Deckel 5 befindet sich die zweite Lochblechscheibe 7, die einteilig den gesamten Deckel 5 abdeckt.

Wie der Name Lochblechscheibe 6, 7 schon sagt, bestehen diese aus einem Blech mit einer Vielzahl an Löchern bzw. Bohrungen 8a, 8b. Der Ladebehälter 9 ist aus Aluminium im Fließpreßverfahren hergestellt.

Ein wesentliches Merkmal der Erfindung ist, daß die Bohrungen 8a in der ersten Lochblechscheibe 6 kleiner sind als die Bohrungen 8b in der zweiten Lochblechscheibe 7. Dies zeigt am deutlichsten Fig. 5. Die Bohrungen 8a in der ersten Lochblechscheibe haben bevorzugt einen Durchmesser zwischen 1 mm und 5 mm und die Bohrungen 8b in der zweiten Lochblechscheibe 7 einen Durchmesser zwischen 6 mm und 10 mm. Der als Membran ausgebildete Deckel 5 hat bevorzugt eine Dicke zwischen 0,1 mm und 0,5 mm. Der Deckel 5 ist z. B. eine gasdichte Folie, z. B. eine Aluminiumfolie.

Zur Abdichtung der Laderäume ist eine Nut 11 in der Wand des Laderaums 1 b ausgebildet, in der der Deckel 5 formschlüssig gehalten ist. Die Figuren zeigen eine Ausführungsform bei der die Nut 11 nur in der Wand des Laderaums 1 b eingelassen ist. Die Nut 11 kann jedoch auch zusätzlich in der Wand des Laderaums 1a eingelassen sein oder nur dort und nicht in der Wand des Laderaums 1b.

In diese Nut 11 ist der Deckel 5 formschlüssig über ein zusätzliches Klemmelement 12 eingesetzt, wobei das Klemmelement 12 hier ein Ring ist, da der Laderaum 1 b zylinderförmig ausgebildet ist und damit das deckelseitige Ende einen Kreis bildet.

Zusätzlich ist der Deckel 5 mit der Wand des Laderaums 1 b bzw. dem Ladebehälter 9 als Bördel 13 ausgebildet, der auch die Dichtfunktion gegen Umwelteinflüsse, wie Feuchtigkeit, übernimmt. Dies zeigt am deutlichsten Fig. 4. Durch die Nut 11 in Verbindung mit dem Klemmelement 12 und gegebenenfalls dem Bördel 13 ist eine Labyrinthdichtung geschaffen.

Aufgrund der großen Anzahl der kleinen Bohrungen 8a in der ersten Lochblechscheibe 6 kann diese ohne verdämmende Wirkung von den beim Abbrand des Treibstoffs 2 freigesetzten Gasschwaden durchströmt werden. Unmittelbar über dem als Membran ausgebildeten Deckel 5 befindet sich die zweite Lochblechscheibe 7 mit größeren Bohrungen 8b. An diesen Bohrungen 8b wird der Deckel 5 bei einem bestimmten Funktionsdruck durchbrochen, und die Gasschwaden gelangen in den Expansionsraum 4. Ein ungewolltes Überzünden vom Expansionsraum 4 in den anderen Laderaum ist nicht möglich, da der Deckel 5 in seiner Dicke so dimensioniert ist, daß er an den relativ kleinen Bohrung 8a der ersten Lochblechscheibe 6 nicht geöffnet wird. Durch die vorher schon beschriebene Labyrinthdichtung (Nut 11) wird ein Gasschlupf von einem Laderaum zum anderen verhindert.

Aus dem Expansionsraum 4 strömen die Gasschwaden über Durchbrüche 20 in der zweiten Lochblechscheibe 7 in den Filterraum 15, in dem sie gekühlt und gereinigt werden. Danach verlassen sie über die Öffnungen 16 im Gehäuse 14 den Gasgenerator.

## Patentansprüche

1. Pyrotechnischer Gasgenerator, insbesondere für passive Rückhaltesysteme in Kraftfahrzeugen, mit mindestens zwei voneinander unabhängigen Laderäumen (1 a, 1 b) in denen Treibstoff (2) angeordnet ist, und denen jeweils eine unabhängig von der anderen ansteuerbare Anzündeinheit (3a, 3b) zugeordnet ist, und alle Laderäume (1a, 1 b) mit einem gemeinsamen Expansionsraum (4) verbunden sind, **dadurch gekennzeichnet, daß** zwischen den Laderäumen (1a, 1b) und dem Expansionsraum (4) ein gemeinsamer als Membran ausgebildeter Deckel (5) angeordnet ist, daß in jedem Laderaum (1a, 1 b) eine erste Lochblechscheibe (6) angeordnet ist, auf der der Deckel (5) aufliegt, daß außerhalb der Laderäume (1 a, 1 b) unmittelbar über dem Deckel (5) eine zweite Lochblechscheibe (7) angeordnet ist, wobei der Deckel (5) zwischen der ersten (6) und zweiten Lochblechscheibe (7) eingeklemmt ist und daß in der ersten Lochblechscheibe (6) kleinere Bohrungen (8a) als in der zweiten Lochblechscheibe (7) angeordnet sind.

2. Gasgenerator nach Anspruch 1, **dadurch gekennzeichnet, daß** die Bohrungen (8a) in der ersten Lochblechscheibe (6) einen Durchmesser zwischen 1 mm und 5 mm haben.

3. Gasgenerator nach Anspruch 1 oder 2, **dadurch gekennzeichnet, daß** die Bohrungen (8b) in der zweiten Lochblechscheibe (7) einen Durchmesser zwischen 6 mm und 10 mm haben.

4. Gasgenerator nach einem der Ansprüche 1 bis 3, **dadurch gekennzeichnet, daß** der Deckel (5) eine Dicke zwischen 0,1 mm und 0,5 mm hat.

5. Gasgenerator nach einem der Ansprüche 1 bis 4, **dadurch gekennzeichnet, daß** die Laderäume (1a, 1b) in einem einteiligen Ladebehälter (9) angeordnet sind und der Boden (10) des Ladebehälters (9) als Generatorstruktur ausgebildet ist.

6. Gasgenerator nach einem der Ansprüche 1 bis 5, **dadurch gekennzeichnet, daß** eine Nut (11) in den Wänden der Laderäume (1a, 1 b) bzw. im Ladebehälter (9) angeordnet ist, in der der Deckel (5) formschlüssig gehalten ist.

7. Gasgenerator nach Anspruch 6, **dadurch gekennzeichnet, daß** in die Nut (11) ein zusätzliches Klemmelement (12) eingesetzt ist.

8. Gasgenerator nach Anspruch 7, **dadurch gekennzeichnet, daß** das Klemmelement (12) ein Ring ist.

9. Gasgenerator nach einem der Ansprüche 1 bis 8, **dadurch gekennzeichnet, daß** der Deckel (5) mit der Wand der Laderäume (1a, 1b) bzw. dem Ladebehälter (9) als Bördel (13) ausgebildet ist.

10. Gasgenerator nach einem der vorhergehenden Ansprüche, **dadurch gekennzeichnet, daß** in dem Boden (10) des Ladebehälters (9) in die Laderäume (1a, 1 b) hineinragende Anzündeinheiten (3a, 3b) eingesetzt sind.

11. Gasgenerator nach einem der vorhergehenden Ansprüche, **dadurch gekennzeichnet, daß** der Ladebehälter (9) von einem Gehäuse (14) umgeben ist, welches durch Clinchen und/oder Bördeln mit dem Ladebehälter (9) verbunden ist.

12. Gasgenerator nach einem der vorhergehenden Ansprüche, **dadurch gekennzeichnet, daß** der Ladebehälter (9) aus Aluminium besteht und im Fließpreßverfahren hergestellt ist.

13. Gasgenerator nach einem der vorhergehenden Ansprüche, **dadurch gekennzeichnet, daß** der Expansionsraum (4) mit einem den Ladebehälter (9) konzentrisch umgreifenden Filterraum (15) verbunden ist und der Filterraum (15) über Öffnungen (16) mit einem Luftsack in Verbindung steht.

## Revendications

1. Générateur pyrotechnique de gaz, destiné notamment à des systèmes passifs de rétention dans des véhicules automobiles, comprenant au moins deux espaces de chargement (10, 14) dans lesquels se trouve un combustible (2) et auxquels sont associées des unités d'allumage (3a, 3b) qui peuvent être commandées indépendamment l'une de l'autre, ces espaces de chargement (1a, 1b) étant tous deux reliés à un espace d'expansion commun (4), **caractérisé en ce qu'**entre les espaces de chargement (1a, 1b) et l'espace d'expansion (4) est disposé un couvercle (5) commun constitué par une membrane, que dans chaque espace de chargement (1a, 1b) est disposé un premier disque perforé en tôle (6) sur lequel est appliqué le couvercle (5), que directement sur celui-ci est disposé en dehors des espaces de chargement (1a, 1b) un second disque perforé en tôle (7) de sorte que le couvercle (5) est pincé entre le premier (6) et le second disque perforé en tôle (7), qui sont tous deux percés de petits trous (8a, 8b).

2. Générateur pyrotechnique selon la revendication 1, **caractérisé en ce que** les trous (8a) dans le premier disque perforé (6) ont un diamètre compris entre 1 et 5 mm.

3. Générateur pyrotechnique selon la revendication 1 ou 2, **caractérisé en ce que** les trous (8b) dans le second disque perforé (7) on un diamètre compris entre 6 et 10 mm.

4. Générateur pyrotechnique selon une des revendications 1 à 3, **caractérisé en ce que** le couvercle (5) a une épaisseur comprise entre 0,1 et 0,5 mm.

5. Générateur pyrotechnique selon une des revendications 1 à 4, **caractérisé en ce que** les espaces de chargement (1a, 1b) sont disposés dans un récipient de chargement (9) monobloc, dont le fond (10) constitue la structure du générateur.

6. Générateur pyrotechnique selon une des revendications 1 à 5, **caractérisé en ce qu'**une rainure (11) est creusée dans les parois des espaces de chargement (1a, 1b) c'est-à-dire dans le récipient de chargement, le couvercle (5) étant maintenu par combinaison de formes dans cette rainure.

7. Générateur pyrotechnique selon la revendication 6, **caractérisé en ce que** dans la rainure (11) est pincé un élément de pincement (12) supplémentaire.

8. Générateur pyrotechnique selon la revendication 7, **caractérisé en ce que** l'élément de pincement (12) est une bague.

9. Générateur pyrotechnique selon une des revendications 1 à 8, **caractérisé en ce que** le couvercle (5) présente un collier de sertissage (13) le long de la paroi des espaces de chargement (1a, 1b) c'est-à-dire du récipient de chargement (9).

10. Générateur pyrotechnique selon une des revendications précédentes, **caractérisé en ce que** dans le fond (10) du récipient de chargement (9) sont insérées des unités d'allumage (3a, 3b) qui pénètrent dans les espaces de chargement (1a, 1b).

11. Générateur pyrotechnique selon une des revendications précédentes, **caractérisé en ce que** le récipient de chargement (9) est entouré par un boîtier (14) qui lui est relié par pincement ou rabattement.

12. Générateur pyrotechnique selon une des revendications précédentes, **caractérisé en ce que** le récipient de chargement (9) est en aluminium, et qu'il est réalisé par extrusion.

13. Générateur pyrotechnique selon une des revendications précédentes, **caractérisé en ce que** l'espace d'expansion (4) est relié à un espace de filtration (15) qui l'entoure concentriquement et qui est relié à un sac d'air par des ouvertures (16).

## Claims

1. Pyrotechnic gas generator, in particular for passive restraint systems in motor vehicles, having at least two charge chambers (1a, 1b) that are independent of each other and in which fuel (2) is arranged, and to which respective ignition units (3a, 3b) are allocated that are controllable independently of each other, all the charge chambers (1a, 1b) being connected to a common expansion chamber (4), **characterized in that** a common cover (5) that is constructed as a membrane is arranged between the charge chambers (1a, 1b) and the expansion chamber (4), **in that** arranged in each charge chamber (1a, 1b) there is a first perforated sheet-metal disc (6), on which the cover (5) rests, **in that** arranged outside the charge chambers (1a, 1b) directly above the cover (5) there is a second perforated sheet-metal disc (7), with the cover (5) being clamped between the first (6) and the second perforated sheet-metal disc (7), and **in that** smaller bore holes (8a) are arranged in the first perforated sheet-metal disc (6) than in the second perforated sheet-metal disc (7).

2. Gas generator according to claim 1, **characterized in that** the bore holes (8a) in the first perforated sheet-metal disc (6) have a diameter between 1 mm and 5 mm.

3. Gas generator according to claim 1 or 2, **characterized in that** the bore holes (8b) in the second perforated sheet-metal disc (7) have a diameter between 6 mm and 10 mm.

4. Gas generator according to one of claims 1 to 3, **characterized in that** the cover (5) has a thickness between 0.1 mm and 0.5 mm.

5. Gas generator according to one of claims 1 to 4, **characterized in that** the charge chambers (1a, 1b) are arranged in a one-part charge container (9), and the base (10) of the charge container (9) is constructed as a generator structure.

6. Gas generator according to one of claims 1 to 5, **characterized in that** arranged in the walls of the charge chambers (1a, 1b) or in the charge container (9) there is a groove (11), in which the cover (5) is held in a form-locking manner.

7. Gas generator according to claim 6, **characterized in that** an additional clamping element (12) is inserted into the groove (11).

8. Gas generator according to claim 7, **characterized in that** the clamping element (12) is a ring.

9. Gas generator according to one of claims 1 to 8, **characterized in that** the cover (5) is formed as a flange (13) with the wall of the charge chambers (1a, 1b) or the charge container (9).

10. Gas generator according to one of the preceding claims, **characterized in that** ignition units (3a, 3b) projecting into the charge chambers (1a, 1b) are inserted in the base (10) of the charge container (9).

11. Gas generator according to one of the preceding claims, **characterized in that** the charge container (9) is surrounded by a housing (14) which is connected to the charge container (9) by means of clinching and/or flanging.

12. Gas generator according to one of the preceding claims, **characterized in that** the charge container (9) consists of aluminium and is manufactured by the extrusion method.

13. Gas generator according to one of the preceding claims, **characterized in that** the expansion chamber (4) is connected to a filter chamber (15) concentrically encompassing the charge container (9), and the filter chamber (15) communicates with an airbag by way of openings (16).
